# EUROPÄISCHE PATENTSCHRIFT

(11) **EP 3 050 839 B1**
(45) Veröffentlichungstag und Bekanntmachung des Hinweises auf die Patenterteilung: **19.04.2017**
(21) Anmeldenummer: 16151693.5
(22) Anmeldetag: 18.01.2016
(51) Int. Cl.: B66F 9/075, F16B 2/18

(54) **VERSCHLUSS MIT EINEM KNIEHEBELSPANNER FÜR EIN FLURFÖRDERZEUG**
CLOSURE WITH A KNEE LEVER TENSIONER FOR AN INDUSTRIAL TRUCK
FERMETURE COMPRENANT UN DISPOSITIF DE TENSION A GENOUILLERE POUR UN CHARIOT DE MANUTENTION

(30) Priorität: 28.01.2015 DE 102015101210
(43) Veröffentlichungstag der Anmeldung: 03.08.2016
(73) Patentinhaber: Jungheinrich Aktiengesellschaft, 22047 Hamburg (DE)
(72) Erfinder: Prehn, Volkmar, 24558 Henstedt-Ulzburg (DE)
(74) Vertreter: Hauck Patentanwaltspartnerschaft mbB

(56) Entgegenhaltungen:
- EP-A1- 0 061 257
- DE-A1-102004 047 339

## Beschreibung

Die vorliegende Erfindung betrifft einen Verschluss mit einem Kniehebelspanner für ein Flurförderzeug mit einem Verschlussteil und einem Halteteil, insbesondere nach dem Oberbegriff des Anspruchs 1 (DE 10 2004 047 339 A1). Das Halteteil besitzt eine Halteachse, an der das Verschlussteil verspannt wird.

Verschlüsse mit Kniehebelspannern werden z.B. bei Türen und Hauben eingesetzt, die durch Haken, Bügel und Hebel zugespannt werden. Als besonders umständlich hat sich bei Verschlüssen mit Kniehebelspannern deren Bedienung und Handhabung erwiesen. Bei bekannten Kniehebelspannern erfolgt ein umständliches Einhängen des Spannelements an dem Halteteil, wodurch die Bedienung erschwert ist. Hinzu kommt, dass sich herkömmliche Kniehebelspanner schlecht in das Außenflächendesign eines Fahrzeugs integrieren lassen, da sie mit ihrem Hebel aus einem Konturverlauf vorstehen und herausragen.

Besonders wichtig ist der Batteriehaubenverschluss an einem Flurförderzeug, da mit diesem nicht nur verschlossen, sondern zugleich über den Batteriehaubenverschluss eine Kraft auf die im Batteriefach positionierte Batterie ausgeübt werden soll. Eine wichtige Anforderung an einen Verschluss mit einem Kniehebelspanner, insbesondere für einen Batteriehaubenverschluss an einem Flurförderzeug besteht darin, eine ausreichend große Spannkraft zu erzeugen, um alle Komponenten klapperfrei zu arretieren. Auch soll eine einfache und komfortable Bedienung möglich sein, die eine Fehlbedienung verhindert. Zudem ist die Batteriehaube bei vielen Fahrzeugen ein zentraler Bestandteil auch unter dem Gesichtspunkt des Designs, so dass hier ein optisch sich gut einfügender Verschluss erwünscht ist. Ebenso sollte der Verschluss sich kostengünstig herstellen und einfach montieren lassen.

Der Erfindung liegt die Aufgabe zugrunde, einen Verschluss mit einem Kniehebelspanner für ein Flurförderzeug bereitzustellen, der bei einfacher und komfortabler Bedienung die vorgenannten Ziele erreicht.

Erfindungsgemäß wird die Aufgabe durch einen Verschluss mit den Merkmalen aus Anspruch 1 gelöst. Vorteilhafte Ausgestaltungen bilden den Gegenstand der Unteransprüche.

Der erfindungsgemäße Verschluss mit einem Kniehebelspanner ist für ein Flurförderzeug vorgesehen, das mit einem Verschlussteil und einem mit einer Halteachse versehenen Halteteil ausgestattet ist. Das Verschlussteil besitzt eine Verankerung zur Verbindung mit einem Fahrzeugteil und einen Verschlusshebel. Der Verschlusshebel ist um eine an der Verankerung vorgesehene Verschlussachse schwenkbar gelagert und weist an seinem zur Verankerung weisenden Ende eine Klinkenachse auf. Um die Klinkenachse ist eine Klinke schwenkbar gelagert, die an ihrem anderen Ende eine Klinkennase in Form eines Vorsprungs aufweist, mit dem die Halteachse hintergriffen und verspannt werden kann. An dem erfindungsgemäßen Kniehebelspanner sind zwei Federelemente vorgesehen, von denen ein Federelement den Verschlusshebel in die geöffnete Stellung drückt und das zweite Federelement die schwenkbar gelagerte Klinke in die geschlossene Stellung drückt. Die Klinke weist zwei Durchbrechungen auf, von denen sich durch eine erste Durchbrechung die Verschlusshebelachse und durch die zweite Durchbrechung eine an der Verankerung angeordnete Begrenzungsachse erstreckt. Beide Durchbrechungen sowie die durch diese geführten Achsen begrenzen und führen den Bewegungsablauf der Klinke, so dass die Klinke unter Einwirkung der Federkräfte eine definierte Schnappposition gegenüber der Halteachse des Halteteils einnimmt. Beim Schließen trifft die Klinke zuerst auf die Halteachse und hintergreift diese, wobei das zweite Federelement ausgelenkt wird.

Danach werden beim Betätigen des Verschlusshebels Klinkenachse und Schwenkachse durch einen mit der Halteachse gebildeten Totpunkt bewegt. Der besondere Vorteil des erfindungsgemäßen Verschlusses liegt darin, dass ein automatisches Einschnappen der Klinke an der Halteachse erfolgen kann und mit der nachfolgenden Bewegung des Verschlusshebels die Klinke durch den von Klinkenachse, Schwenkachse und Halteachse gebildeten Totpunkt bewegt wird und der Verschlusshebel, trotz entgegengesetzt wirkender Federkraft, durch die erzeugte Spannkraft in der geschlossenen Stellung gehalten wird. Ein besonderer Vorteil bei dem erfindungsgemäßen Verschluss liegt darin, dass die Bewegung, die zu einem endgültigen Verspannen führt, sich aus zwei Komponenten zusammensetzt. Einerseits führt das Verschlussteil mit der Klinke in einer definierten Position zu einem einfachen und zuverlässigen Hintergreifen und Einschnappen der Klinke an der Halteachse. Zum anderen kann durch ein Verstellen des Verschlusshebels mit der eingeschnappten Klinke diese durch den Totpunkt bewegt werden, um so den Kniehebelverschluss zu verriegeln.

In einer bevorzugten Weiterbildung werden in einer verschlossenen Position durch das Hochklappen des Verschlusshebels Klinkenachse und Schwenkachse durch den mit der Halteachse gebildeten Totpunkt bewegt, wodurch zunächst die Spannkraft aufgehoben wird. Durch ein Weiterschwenken des Verschlusshebels entgegen der Federkraft wird die Klinke aus dem Hintergriff an der Halteachse herausgehoben. Damit ist ein Entspannen und Öffnen des Verschlusses mit einer durchgängigen Bewegung des Verschlusshebels möglich.

In einer bevorzugten Ausgestaltung sind das Verschlussteil an einem schwenkbaren Fahrzeugteil und das Halteteil fahrzeugfest montiert.

In einer bevorzugten Ausgestaltung sind beide Federelemente gleich ausgebildet. Hierdurch wird auch die Montage des Kniehebelspanners vereinfacht, da nicht zwischen den beiden Federelementen zu unterscheiden ist.

In einer bevorzugten Ausgestaltung ist die erste Durchbrechung in der Klinke als eine längliche Form ausgebildet, die die Verschlusshebelachse umgibt. Die erste Durchbrechung ist als ein gebogenes Langloch ausgebildet, das den Schwenkbereich der Klinke um seine Klinkenachse begrenzt und ausreichend Spiel für ein Hinterschnappen der Halteachse zur Verfügung stellt.

In einer bevorzugten Ausgestaltung ist die zweite Durchbrechung mit einer ovalen oder runden Form ausgebildet. Die durch die zweite Durchbrechung geführte Begrenzungsachse bewegt sich entlang dem Umfang der zweiten Durchbrechung, wobei bevorzugt bei einem Hintergreifen oder Freikommen der Klinke von der Halteachse die Begrenzungsachse von dem Umfang der zweiten Durchbrechung freikommt. Auch in der verschlossenen Position ist die Begrenzungsachse frei in der zweiten Durchbrechung und hat keinen Kontakt mit deren Umfangswand.

In einer besonders bevorzugten Ausgestaltung ist ein Flurförderzeug mit dem erfindungsgemäßen Verschluss ausgestattet, wobei der Verschlussteil an einem schwenkbaren Verkleidungsteil angeordnet ist, das in seine zu verschließende Position geschwenkt, die Klinke des Verschlussteils die Halteachse hinterschnappt. Durch das Verschwenken des Verkleidungsteils in eine verschlossene, aber noch nicht verriegelte Position hintergreift die Klinke die Halteachse. In einer bevorzugten Ausgestaltung wird die Klinke durch den Verschlusshebel hinter der Halteachse herausgehoben, nachdem Klinkenachse und Schwenkachse durch den Totpunkt aus der verriegelten Stellung kommend in eine entspannte Stellung bewegt worden sind. Bevorzugt ist das Verschlussteil des Kniehebelspanners an einem Batteriehaubendeckel angeordnet und auf einem Bogen mit dem Batteriehaubendeckel verschwenkbar, der in der geschlossenen Position des Batteriehaubendeckels die Klinke in eine die Haltebuchse hintergreifende Position schnappen lässt.

Ein weiterer, insbesondere die Montage erleichternder Umstand besteht darin, dass die Verankerung für das Verschlussteil eine flache Verankerungsplatte mit einem hochstehenden Endabschnitt an dem von dem Verschlusshebel fortweisenden Ende aufweist, wobei die Verankerungsplatte eine oder mehrere Bohrungen für Befestigungsmittel und der Endabschnitt mindestens eine Bohrung für ein Abstandsmittel besitzt, über das der Totpunkt des Kniehebelspanners einstellbar ist. In dieser Ausgestaltung wird die Verankerung zunächst so an dem Flurförderzeug befestigt, so dass die Verankerung noch verschoben werden kann. Über das Abstandsmittel wird die Position der Verankerung vor einem endgültigen Feststellen der Verankerung ermittelt. Kriterium hierbei ist es, den Totpunkt so einzustellen, dass der Verschlusshebel einfach und wirksam eingestellt ist.

In einer bevorzugten Ausgestaltung ist ein Sensor im Bereich des Halteteils vorgesehen, der ein Einschnappen der Klinke und/oder ein Verspannen dieser sensiert. Der Sensor kann an dem Halteteil selbst montiert sein oder im Bereich der Fahrzeugverkleidung, die sich angrenzend zu dem Halteteil befindet. Je nach Ausgestaltung können ein oder zwei unterschiedliche Stellungen der Klinke sensiert werden. Eine erste sensierbare Stellung ist die Klinke im eingeschnappten Zustand an der Halteachse. Der zweite, von dem Sensor messbare Zustand ist die verspannte Klinke. Als Sensor kann beispielsweise ein Näherungssensor vorgesehen sein, der z. B. über die Bewegung der Klinkenspitze unterscheiden kann, ob die Klinke lediglich eingeschnappt oder auch verspannt ist.

Eine bevorzugte Ausgestaltung der Erfindung wird nachfolgend an einem Ausführungsbeispiel näher erläutert. Es zeigen:
- Fig. 1: einen ausschnittsweisen Querschnitt durch einen Batteriehaubenverschluss,
- Fig. 2: eine perspektivische Ansicht des Verschlussteils des Kniehebelspanners bei geöffnetem Verschlusshebel,
- Fig. 3: eine perspektivische Ansicht des Verschlussteils des Kniehebelspanners mit Blick auf die Klinke,
- Fig. 4: eine Ansicht von unten auf das Verschlussteil,
- Fig. 5: eine Schnittansicht entlang der Linie A-A aus Fig. 4 und
- Fig. 6: vier verschiedene Stellungen des Kniehebelspanners.

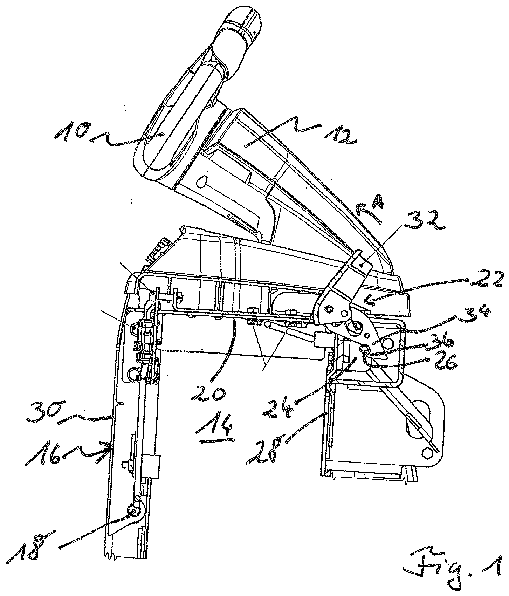

Fig. 1 zeigt in einer geschnittenen Ansicht von der Seite ein Antriebsteil eines Flurförderzeugs. Bedient wird das Flurförderzeug über eine Steuereinheit 10, die auf einem Träger 12 angeordnet ist. Unterhalb des Trägers 12 ist ein Ausschnitt des Batteriefachs 14 zu erkennen. Verschlossen wird das Batteriefach 14 über einen Batteriehaubendeckel 16, dessen Schwenkachse 18 fahrzeugfest angeordnet ist. Über die Schwenkachse 18 wird der Batteriehaubendeckel 16 auf- und wieder zugeschwenkt. Der Batteriehaubendeckel 16 besitzt eine L-Form, wobei das L auf dem Kopf stehend mit dem freien Ende seines vertikalen Strichs an dem Fahrzeug angelenkt ist. Die Schwenkachse 18 liegt hinter und unterhalb eines Verschlussteils 22. Auf dem horizontalen Abschnitt 20 des Batteriehaubendeckels 16 ist das Verschlussteil 22 des Kniehebelspanners angeordnet. Das Halteteil 24 mit der Halteachse 26 ist an der fahrzeugfesten vertikalen Wand 28 des Antriebsteils angeordnet. Die Wand 28 läuft parallel zu dem vertikalen Abschnitt 30 des schwenkbaren Batteriehaubendeckels 16.

Fig. 1 zeigt an dem Verschlussteil 22 den Verschlusshebel 32 und die Klinke 34. Die Klinke 34 besitzt einen nasenförmigen Vorsprung 36, mit dem sie die Halteachse 26 hintergreift. In der in Fig. 1 dargestellten Position der Klinke 34 kann durch ein Bewegen des Verschlusshebels 32 in Richtung des eingezeichneten Pfeils A die Klinke von der Halteachse 26 gehoben werden und freikommen.

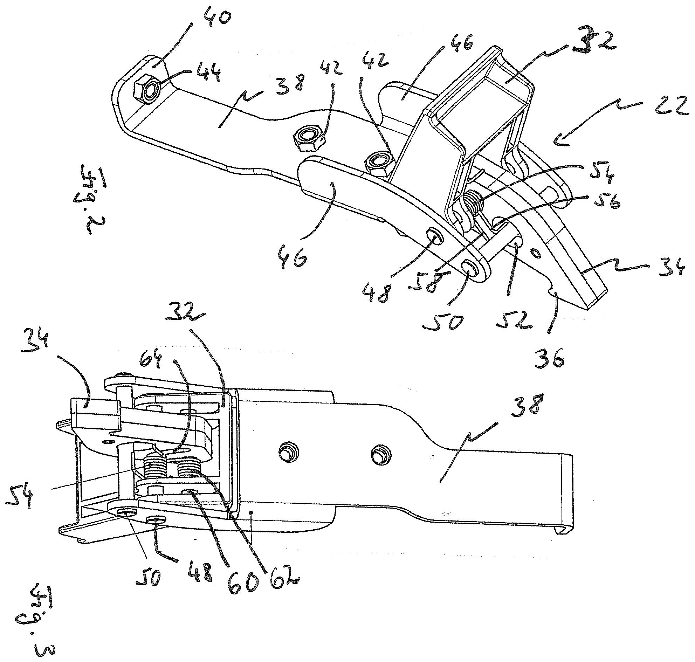

Der nähere Aufbau des Verschlussteils 22 ergibt sich aus den perspektivischen Darstellungen in den Fign. 2 und 3. Fig. 2 zeigt das Verschlussteil 22, das eine Verankerungsplatte 38 mit einem hochstehenden Endabschnitt 40 besitzt. Die Verankerungsplatte 38 ist mit zwei Sicherungsmuttern 42 und der hochstehende Abschnitt mit einer Sicherungsmutter 44 versehen. Die Verankerungsplatte geht in zwei seitliche Schenkel 46 über, die eine Verschlusshebelachse 48 und eine Begrenzungsachse 50 tragen. Der Verschlusshebel 32 ist schwenkbar an der Verschlusshebelachse 48 gelagert. Der Verschlusshebel 32 ist aus einem Kunststoffmaterial, beispielsweise faserverstärktem Polyamid, hergestellt, während die weiteren Teile bevorzugt aus Metall bestehen. In Fig. 2 ist auch die Klinke 34 mit ihrer zweiten Durchbrechung 52 zu erkennen. Die zweite Durchbrechung 52 besitzt eine kreisförmige Form und die Begrenzungsachse 50 ist durch die zweite Durchbrechung 52 geführt.

Fig. 2 zeigt ein Federelement 54, das mit einem Schenkel 56 an der zweiten Durchbrechung 52 und dem anderen Schenkel 58 gegen die Begrenzungsachse 50 anliegt. In Fig. 2 ist ferner die die Halteachse 26 hintergreifende Nase 36 zu erkennen.

Fig. 3 zeigt das Verschlussteil 22 in einer Ansicht von unten auf die Verankerungsplatte 38. In der Ansicht von unten ist auch eine Klinkenachse 60 erkennbar. Die Klinkenachse 60 ist an dem Verschlusshebel 32 angeordnet. Die Klinke 34 ist um die Klinkenachse 60 verschwenkbar, wobei die Klinke 34 durch ein auf der Klinkenachse 60 angeordnetes Federelement 62 gegenüber dem Verschlusshebel 32 vorgespannt ist. In der Ansicht aus Fig. 3 ist auch die Durchbrechung 64 erkennbar, durch die die Verschlusshebelachse 48 geführt ist. Die Durchbrechung 64 ist als ein bogenförmiges Langloch ausgebildet.

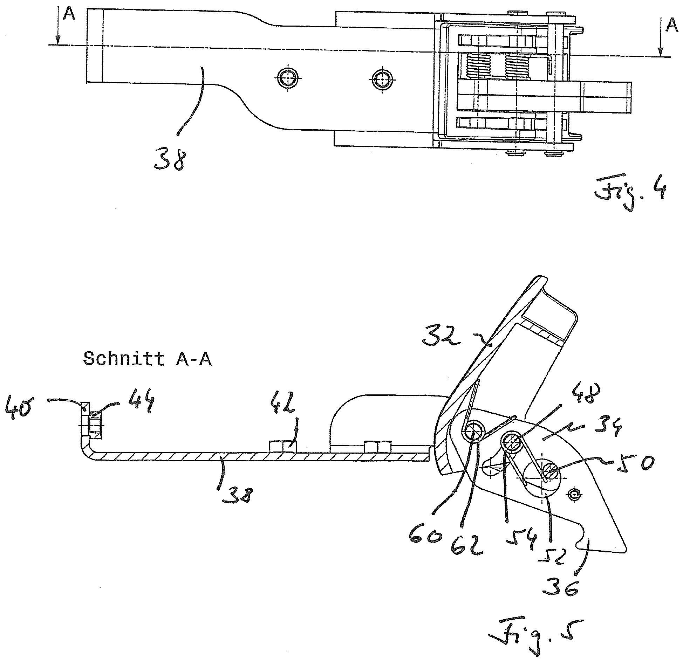

Der Aufbau des Verschlussteils 22 des Kniehebelspanners ist aus Fig. 4 und der Schnittansicht aus Fig. 5 erkennbar. Fig. 5 zeigt den Verschlusshebel 32 und die Klinke 34. Die Klinke 34 ist über die Klinkenachse 60 schwenkbar an dem Verschlusshebel 32 gelagert. Gegenüber der Verschlusshebelachse 48 ist die Klinkenachse 60 auf der zur Verankerungsplatte 38 weisenden Seite angeordnet. Anders ausgedrückt, die Klinkenachse 60 befindet sich an dem von der Klinkennase 36 fortweisenden Teil der Klinke 34. Klinke 34 und Verschlusshebel 32 sind gegeneinander durch das Federelement 62 verspannt. Das Federelement 54 ist auf der Verschlusshebelachse 48 angeordnet und verspannt die Klinke 34 gegenüber der Begrenzungsachse 50. Bei einem Verschwenken des Verschlusshebels 32 in der in Fig. 5 dargestellten Position, wird die Klinke in Richtung Verschlussstellung verschwenkt, wobei die Begrenzungsachse 50 in der Durchbrechung 52 entlang dem Umfang sich bewegt. Trifft die Klinke 34 mit der Klinkennase 36 auf die Halteachse 26, so wird gegen die Kraft der Feder 54 die Klinkennase in der zweiten Durchbrechung 52 bewegt, und hinterschnappt die Halteachse 26, wie beispielsweise in Fig. 1 dargestellt.

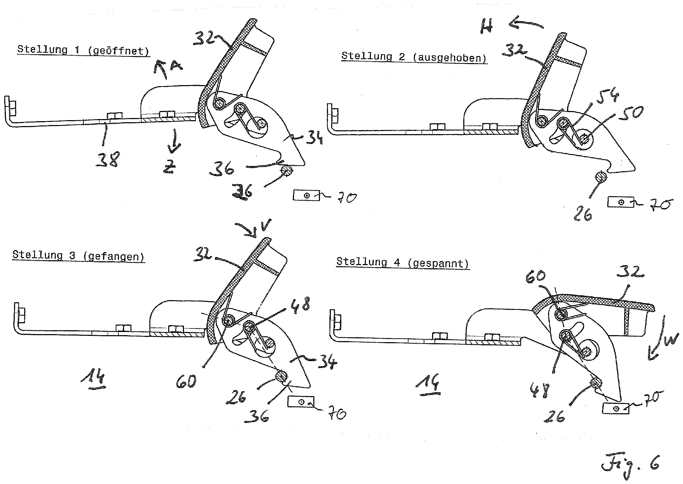

Fig. 6 zeigt mit Stellungen 1 bis 4 unterschiedliche Stellungen für den Kniehebelspanner. In Stellung 1 ist der Kniehebelspanner geöffnet und die Klinke 34 befindet sich oberhalb der Halteachse 26. Wie an der Neigung der Verankerungsplatte 38 zu erkennen, ist der Batteriehaubendeckel (nicht dargestellt) in der Stellung 1 (geöffnet) noch nicht vollständig geschlossen. Wird die Verankerungsplatte 38 in Richtung des Pfeils Z bewegt, so gleitet die Klinkennase 36 über die Halteachse 26 und gelangt dabei in die Stellung 3. Wird dagegen ausgehend von der Stellung 1 der Verschlusshebel 32 weiter in Richtung A bewegt, öffnet der Batteriehaubendeckel und wird aufgeschwenkt.

Stellung 3 zeigt die Klinke 34 in ihrer gefangenen Stellung, bei der die Halteachse 26 von der Klinkennase 36 hintergriffen ist. In dieser gefangenen Stellung liegen die Klinkenachse 60, die Verschlusshebelachse 48 und die Halteachse 26 nicht auf einer Linie, sondern bilden ein Dreieck, bei dem die Verschlusshebelachse von dem Batterieraum 14 fortweist. Wird der Verschlusshebel 32 in Stellung 3 (gefangen) in Richtung V verschwenkt, so wandert die Verschlusshebelachse 48 durch den Totpunkt und der Kniehebelspanner in seine gespannte Stellung, die in Stellung 4 (gespannt) dargestellt ist. In Stellung 4 (gespannt) bilden die Verschlusshebelachse 48 gemeinsam mit der Klinkenachse 60 und der Halteachse 26 wieder ein Dreieck, bei dem jedoch die Verschlusshebelachse 48 zum Batterieraum hinweist.

In Stellung 4 ist der Kniehebelspanner gespannt. In Stellung 4 wird deutlich, warum der erfindungsgemäße Kniehebelspanner sich besonders gut in die Kontur der Batteriehaube integriert. Durch ein Weiterbewegen in Richtung des Pfeils w des Verschlusshebels 32 kann dieser an die anliegende Kante der Batteriehaube angepasst werden und integriert sich so in die Kontur.

Ausgehend von Stellung 3 (gefangen), in der die Klinke 34 die Halteachse 26 hinterfasst, kann der Kniehebelspanner in die Stellung 2 gebracht werden, indem die Klinke 34 aus ihrer gefangenen Stellung herausgehoben wird. Dies erfolgt durch eine Betätigung des Verschlusshebels 32 in Richtung des Pfeils H, wodurch der Kniehebelspanner in Stellung 2 gelangt. Das Ausheben der Klinke 34 erfolgt hierbei durch die gemeinsame Schwenkbewegung mit dem Verschlusshebel um die Verschlusshebelachse, so dass diese unter Auslenkung der Feder 54 von der Halteachse 26 gehoben wird. Deutlich ist die Aushebebewegung in Fig. 2 zu sehen, da die Begrenzungsachse 50 in der zweiten Durchbrechung 52 nicht an deren Umfangswand anliegt, sondern entgegen der Federspannung von der Umfangswand abgehoben ist.

Zu den Stellungen 1 bis 4 ist jeweils ein Näherungssensor 70 dargestellt. Der Näherungssensor 70 sensiert in Stellung 3, dass der Abstand zwischen der Klinke 34 und dem Näherungssensor 70 reduziert ist. Auf diese Weise kann festgestellt werden, dass die Klinke 34 an der Halteachse 26 eingeschnappt ist. Bei der Stellung 4 (gespannt) schwenkt die Klinke 34 um die Halteachse 26, so dass der Abstand zu dem Näherungssensor 70 weiter reduziert wird. Hierdurch kann der Näherungssensor 70 feststellen, dass der Kniehebelspanner verspannt ist.

Abhängig von den Signalen des Sensors 70 kann ein entsprechendes Signal an die Fahrzeugsteuerung abgesetzt werden. So kann beispielsweise, wenn die Klinke nicht eingeschnappt ist oder die Klinke nicht den minimalen Abstand zum Näherungssensor 70 eingenommen hat, ein entsprechendes Signal an der Fahrzeugsteuerung ausgelöst werden, das beispielsweise einem Fahrer angezeigt und/ oder sogar einen Stillstand des Fahrzeugs auslöst. So kann verhindert werden, dass das Flurförderzeug bei nicht geschlossenem Kniehebelspanner benutzt wird.

### Bezugszeichenliste

- 10: Steuereinheit
- 12: Träger
- 14: Batteriefach
- 16: Batteriehaubendeckel
- 18: Schwenkachse
- 20: Abschnitt des Batteriehaubendeckels
- 22: Verschlussteil
- 24: Halteteil
- 26: Halteachse
- 28: Wand
- 30: Abschnitt des Batteriedeckels
- 32: Verschlusshebel
- 34: Klinke
- 36: Klinkennase
- 38: Verankerungsplatte
- 40: hochstehender Endabschnitt
- 42: Sicherungsmutter
- 44: Sicherungsmutter
- 46: Schenkel
- 48: Verschlusshebelachse
- 50: Begrenzungsachse
- 52: Durchbrechung
- 54: Federelement
- 56: Schenkel
- 58: Schenkel
- 60: Klinkenachse
- 62: Federelement
- 64: Durchbrechung
- 70: Näherungssensor

## Patentansprüche

1. Verschluss mit einem Kniehebelspanner für ein Flurförderzeug mit einem Verschlussteil (22) und einem Halteteil (24), das eine Halteachse (26) aufweist, wobei das Verschlussteil (22) eine Verankerung (38) und einen Verschlusshebel (32) aufweist, der um eine an der Verankerung (38) vorgesehene Verschlusshebelachse (48) schwenkbar gelagert ist und an seinem zur Verankerung (38) weisenden Ende eine Klinkenachse (60) aufweist, um die eine Klinke (34) schwenkbar gelagert ist, die an einem Ende eine Klinkennase (36) vorweist, mit dem die Halteachse (26) hintergriffen werden kann, **dadurch gekennzeichnet, dass** ein Federelement (62) den Verschlusshebel bezogen auf die Klinke in die geöffnete Stellung drückt und ein zweites Federelement (54) die Klinke bezogen auf die Verankerung in die geschlossene Stellung drückt, wobei die Klinke (34) zwei Durchbrechungen (52, 64) aufweist, von denen sich durch eine erste Durchbrechung (64) die Verschlusshebelachse (48) und durch die zweite Durchbrechung (52) eine an der Verankerung (38) angeordnete Begrenzungsachse (50) erstreckt, so dass die Klinke (34) unter Wirkung der Federelemente (54, 62) mit ihrer zweiten Durchbrechung (52) an der Begrenzungsachse (50) eine definierte Position einnimmt, wobei beim Schließen die Klinke (34) zuerst auf die Halteachse (26) trifft und diese unter Auslenkung mindestens eines der Federelemente (54, 62) hintergreift und danach bei einer Betätigung des Verschlusshebels (32) Klinkenachse (60) und Schwenkachse (18) durch eine mit der Halteachse (26) gebildeten Totpunkt bewegt werden und der Verschlusshebel durch die erzeugte Spannkraft in der geschlossenen Stellung gehalten ist.

2. Verschluss nach Anspruch 1, **dadurch gekennzeichnet, dass** in der verschlossenen Position durch Schwenken des Verschlusshebels (32) Klinkenachse (60) und Schwenkachse (18) durch den mit der Halteachse (26) gebildeten Totpunkt bewegt werden und durch Weiterschwenken des Verschlusshebels entgegen der Kraft des Federelementes (54) die Klinke (34) von der Halteachse (26) freikommt.

3. Verschluss nach Anspruch 1 oder 2, **dadurch gekennzeichnet, dass** das Verschlussteil an einem schwenkbaren Fahrzeugteil und das Halteteil fahrzeugfest montiert sind.

4. Verschluss nach Anspruch 1 oder 2, **dadurch gekennzeichnet, dass** die beiden Federelemente (54, 62) gleich ausgebildet sind.

5. Verschluss nach einem der Ansprüche 1 bis 3, **dadurch gekennzeichnet, dass** die erste Durchbrechung (64) eine längliche Form aufweist, in der die Verschlusshebelachse (48) in ihrer Bewegung durch Endanschläge begrenzt wird.

6. Verschluss nach einem der Ansprüche 1 bis 4, **dadurch gekennzeichnet, dass** die zweite Durchbrechung (52) eine ovale oder runde Form aufweist, wobei die Begrenzungsachse (50) sich entlang dem Umfang der zweiten Durchbrechung (52) bewegt.

7. Verschluss nach einem der Ansprüche 1 bis 5, **dadurch gekennzeichnet, dass** bei einem Hintergreifen oder Freikommen der Klinke (34) von der Halteachse (26) die Begrenzungsachse (50) von dem Umfang der zweiten Durchbrechung (52) freikommt.

8. Flurförderzeug mit einem Verschluss nach einem der Ansprüche 1 bis 7, **dadurch gekennzeichnet, dass** das Verschlussteil (22) an einem schwenkbaren Verkleidungsteil angeordnet ist, das in seine zu verschließende Position geschwenkt, die Klinke (34) an der Halteachse (26) hinterschnappt.

9. Flurförderzeug nach Anspruch 8, **dadurch gekennzeichnet, dass** der Verschlusshebel (32) die Klinke (34) aus der Halteachse (26) heraushebt, nachdem Klinkenachse (60) und Schwenkachse (18) durch den Totpunkt bewegt wurden.

10. Flurförderzeug nach Anspruch 8 oder 9, **dadurch gekennzeichnet, dass** das Verschlussteil (22) an einem Batteriehaubendeckel (16) angeordnet ist und das Verschlussteil (22) auf einem Bogen verschwenkt, der in der geschlossenen Position des Batteriehaubendeckels (16) die Halteachse (26) von der Klinke (34) hintergreifen lässt.

11. Flurförderzeug nach einem der Ansprüche 8 bis 10, **dadurch gekennzeichnet, dass** die Verankerung für das Verschlussteil (22) eine flache Verankerungsplatte (38) mit einem vorstehenden Endabschnitt (40) an dem vom Verschlusshebel (32) fortweisenden Ende aufweist, wobei die Verankerungsplatte (38) eine oder mehrere Bohrungen für Befestigungsmittel und der Endabschnitt mindestens eine Bohrung für Abstandsmittel besitzt, über die der Totpunkt einstellbar ist.

12. Flurförderzeug nach einem der Ansprüche 8 bis 11, **dadurch gekennzeichnet, dass** ein Sensor im Bereich des Halteteils vorgesehen ist, der ein Einschnappen der Klinke und/oder ein Verspannen sensiert.

## Claims

1. A closure with a toggle clamp for an industrial truck with a closure part (22) and a holding part (24), which has a holding axle (26), wherein the closure part (22) has an anchoring element (38) and a closing lever (32), which is pivotably mounted around a closing lever axle (48) provided on the anchoring element (38) and has a latch axle (60) on its end facing towards the anchoring element (38), around which a latch (34) is pivotably mounted, which has a latch nose (36) on one end, which can catch behind the holding axle (26), **characterized in that** a spring element (62) pushes the closing lever into the open position with respect to the latch and a second spring element (54) pushes the latch into the closed position with respect to the anchoring element, wherein the latch (34) has two through holes (52, 64), of which the closing lever axle (48) extends through a first through hole (64) and a boundary axle (50) arranged on the anchoring element (38) extends through the second through hole (52) so that the latch (34) with its second through hole (52) assumes a defined position on the boundary axle (50) under the influence of the spring elements (54, 62), wherein upon closing the latch (34) first hits the holding axle (26) and catches behind it while deflecting at least one of the spring elements (54, 62) and then, when the closing lever (32) is actuated, the latch axle (60) and pivot axle (18) are moved through a dead center formed with the holding axle (26) and the closing lever is held in the closed position by the generated clamping force.

2. The closure according to claim 1, **characterized in that** the latch axle (60) and the pivot axle (18) are moved through the dead center formed with the holding axle (26) in the closed position by pivoting the closing lever (32) and by further pivoting the closing lever opposite the force of the spring element (54), the latch (34) is released from the holding axle (26).

3. The closure according to claim 1 or 2, **characterized in that** the closure part is mounted on a pivotable vehicle part and the holding part is fixed on the vehicle.

4. The closure according to claim 1 or 2, **characterized in that** the two spring elements (54, 62) are designed identically.

5. The closure according to one of claims 1 to 3, **characterized in that** the first through hole (64) has an elongated shape, in which the closing lever axle (48) is restricted in its movement by end stops.

6. The closure according to one of claims 1 to 4, **characterized in that** the second through hole (52) has an oval or round shape, wherein the boundary axle (50) moves along the circumference of the second through hole (52).

7. The closure according to one of claims 1 to 5, **characterized in that**, when the latch (34) catches behind or releases from the holding axle (26), the boundary axle (50) releases from the circumference of the second through hole (52).

8. An industrial truck with a closure according to one of claims 1 to 7, **characterized in that** the closure part (22) is arranged on a pivotable cover part, which snaps behind the latch (34) on the holding axle (26) when pivoted into its position to be closed.

9. The industrial truck according to claim 8, **characterized in that** the closing lever (32) lifts the latch (34) out of the holding axle (26) after latch axle (60) and pivot axle (18) have been moved through the dead center.

10. The industrial truck according to claim 8 or 9, **characterized in that** the closure part (22) is arranged on a battery hood cover (16) and the closure part (22) pivots on a bracket, which lets the latch (34) catch behind the holding axle (26) in the closed position of the battery hood cover (16).

11. The industrial truck according to one of claims 8 to 10, **characterized in that** the anchoring element for the closure part (22) has a flat anchoring plate (38) with a protruding end section (40) on the end facing away from the closing lever (32), wherein the anchoring plate (38) has one or more bore holes for fastening means and the end section has at least one bore hole for spacing means, via which the dead center is adjustable.

12. The industrial truck according to one of claims 8 to 11, **characterized in that** a sensor is provided in the area of the holding part, which detects a snapping in and/or clamping of the latch.

## Revendications

1. Fermeture comprenant un dispositif de tension à genouillère pour un chariot de manutention, avec une pièce de fermeture (22) et une pièce de maintien (24) présentant un axe de maintien (26), dans laquelle la pièce de fermeture (22) présente un ancrage (38) et un levier de fermeture (32), lequel est monté de façon pivotante autour d'un axe de levier de fermeture (48) prévu sur l'ancrage (38) et présente un axe de verrou (60) à son extrémité tournée vers l'ancrage (38), autour duquel un verrou (34) est monté de façon pivotante, lequel présente un nez de verrou (36) à une extrémité, lequel peut venir en prise derrière l'axe de maintien (26), **caractérisée en ce qu'**un élément de ressort (62) pousse le levier de fermeture vers la position ouverte par rapport au verrou, et un deuxième élément de ressort (54) pousse le verrou dans la position fermée par rapport à l'ancrage, dans laquelle le verrou (34) présente deux brèches (52, 64), à partir desquelles s'étendent l'axe de levier de fermeture (48) à travers une première brèche (64) et un axe de délimitation (50) disposé sur l'ancrage (38) à travers la deuxième brèche (52), de sorte que le verrou (34) se met dans une position définie avec sa deuxième brèche (52) sur l'axe de délimitation (50) sous l'action des éléments de ressort (54, 62), dans lequel, lors de la fermeture, le verrou (34) rencontre tout d'abord l'axe de maintien (26) et vient s'engager en prise derrière celui-ci avec la déviation d'au moins l'un des éléments de ressort (54, 62), puis, lors d'un actionnement du levier de fermeture (32), l'axe de verrou (60) et l'axe de pivotement (18) sont déplacés vers un point mort formé avec l'axe de maintien (26) et le levier de fermeture est maintenu dans la position fermée par la force de tension produite.

2. Fermeture selon la revendication 1, **caractérisée en ce que** dans la position fermée, un pivotement du levier de fermeture (32) déplace l'axe de verrou (60) et l'axe de pivotement (18) vers le point mort formé avec l'axe de maintien (26) et un pivotement supplémentaire du levier de fermeture contre la force de l'élément de ressort (54) libère le verrou (34) par rapport à l'axe de maintien (26).

3. Fermeture selon la revendication 1 ou 2, **caractérisée en ce que** la pièce de fermeture est montée sur une pièce pivotante d'un véhicule et la pièce de maintien est montée fixement par rapport au véhicule.

4. Fermeture selon la revendication 1 ou 2, **caractérisée en ce que** les deux éléments de ressort (54, 62) sont conçus de façon identique.

5. Fermeture selon l'une des revendications 1 à 3, **caractérisée en ce que** la première brèche (64) présente une forme allongée, dans laquelle l'axe de levier de fermeture (48) est limité dans son déplacement par des butées finales.

6. Fermeture selon l'une des revendications 1 à 4, **caractérisée en ce que** la deuxième brèche (52) présente une forme ovale ou ronde, dans laquelle l'axe de délimitation (50) se déplace le long du pourtour de la deuxième brèche (52).

7. Fermeture selon l'une des revendications 1 à 5, **caractérisée en ce que** lors de l'engagement ou de la libération du verrou (34) par l'axe de maintien (26), l'axe de délimitation (50) s'écarte du pourtour de la deuxième brèche (52).

8. Chariot de manutention comprenant une fermeture selon l'une des revendications 1 à 7, **caractérisé en ce que** la pièce de fermeture (22) est montée sur une pièce d'habillage pivotante, laquelle vient s'engager en prise derrière le verrou (34) sur l'axe de maintien (26) dans sa position à fermer.

9. Chariot de manutention selon la revendication 8, **caractérisé en ce que** le levier de fermeture (32) fait sortir le verrou (34) de l'axe de maintien (26) une fois que l'axe de verrou (60) et l'axe de pivotement (18) sont passés par le point mort.

10. Chariot de manutention selon la revendication 8 ou 9, **caractérisé en ce que** la pièce de fermeture (22) est disposée sur un couvercle de capot de batterie (16) et la pièce de fermeture (22) pivote sur un arc laissant le verrou (34) venir en prise derrière l'axe de maintien (26) dans la position fermée du couvercle de capot de batterie (16).

11. Chariot de manutention selon l'une des revendications 8 à 10, **caractérisé en ce que** l'ancrage destiné à la pièce de fermeture (22) présente une plaque d'ancrage (38) plane avec une section finale faisant saillie (40) à l'extrémité détournée du levier de fermeture (32), dans lequel la plaque d'ancrage (38) comporte un ou plusieurs perçages destinés à des moyens de fixation, et la section finale comporte au moins un perçage destiné à des moyens d'espacement permettant de régler le point mort.

12. Chariot de manutention selon l'une des revendications 8 à 11, **caractérisé en ce qu'**il est prévu un capteur dans la région de la pièce de maintien, lequel détecte un enclenchement du verrou et/ou un serrage.
